# EUROPÄISCHE PATENTSCHRIFT

(11) **EP 1 274 560 B1**
(45) Veröffentlichungstag und Bekanntmachung des Hinweises auf die Patenterteilung: **20.10.2004**
(21) Anmeldenummer: 01943251.7
(22) Anmeldetag: 17.04.2001
(51) Int. Cl.: B29C 70/68, B29C 45/14, B29C 45/16, B32B 7/04, B32B 31/10, B32B 31/30

(54) **MEHRSCHICHTIGER VERBUNDKÖRPER VON LEDER UND THERMOPLASTISCHEN ELASTOMEREN**
MULTILAYERED COMPOSITE BODY CONSISTING OF LEATHER AND THERMOPLASTIC ELASTOMERS
CORPS COMPOSITE MULTICOUCHE A BASE DE CUIR ET D'ELASTOMERES THERMOPLASTIQUES

(30) Priorität: 20.04.2000 DE 10019605
(43) Veröffentlichungstag der Anmeldung: 15.01.2003
(73) Patentinhaber: BASF AKTIENGESELLSCHAFT, 67056 Ludwigshafen (DE)
(72) Erfinder: RÖSCH, Joachim, 67063 Ludwigshafen (DE); HÜFFER, Stephan, 67063 Ludwigshafen (DE); IGL, Georg, 71554 Weissach (DE); BARTL, Jürgen, 67063 Ludwigshafen (DE); TAEGER, Tilman, Lüdecke, 64342 Seeheim-Jugenheim (DE); KLENZ, Rainer, 67454 Hassloch (DE); GINSS, Christophe, F-67120 Wolxheim (FR); GUENTHER, Erhard, 67454 Hassloch (DE); LIESE, Michaela, 67061 Ludwigshafen (DE)
(86) Internationale Anmeldenummer: PCT/EP2001/004309
(87) Internationale Veröffentlichungsnummer: WO 2001/083200

(56) Entgegenhaltungen:
- EP-A- 1 060 861
- EP-A- 1 060 877
- EP-B- 0 199 708
- GB-A- 2 018 196
- US-A- 4 313 776
- US-A- 5 336 352

## Beschreibung

Die Erfindung betrifft ein Verfahren zur Herstellung eines mehrschichtigen Verbundkörpers, welcher eine Schicht aus Leder umfasst, eine zumindest abschnittsweise mit der Schicht aus Leder verbundene Schicht einer aus einem Polymeren gebildeten Hartkomponente, sowie einer zwischen Leder und Hartkomponente angeordneten Schicht aus einer Weichkomponente.

Ferner betrifft die Erfindung einen mit dem erfindungsgemäßen Verfahren erhältlichen mehrschichtigen Verbundkörper.

Bei Fahrzeugen der gehobenen Preiskategorie ist es zur Erzeugung eines exklusiven Eindrucks üblich, den Innenraum des Fahrzeugs mit Leder auszukleiden. Dazu werden bereits vorgeformte Formteile wie Türinnenverkleidungen, Armaturenbretter, Mittelkonsolen, Blenden oder Griffe mit entsprechend zugeschnittenen und gegebenenfalls vorgeformten Lederstrukturen beklebt. Insbesondere im Fall von nicht-planen Oberflächen muß das Leder in einem separaten Arbeitsgang entweder in Form genäht oder getrennt tief gezogen werden. Eine solche Kaschierung von Formteilen ist nur schwer automatisierbar und wegen des hohen Anteils an Handarbeit sehr teuer. Die bisher üblichen Verkleidungsverfahren führen auch nur zu unbefriedigenden Ergebnissen. So müssen Emissionen von Lösemitteln und Restmonomeren aus den Klebstoff Systemen in Kauf genommen werden. Insbesondere in Automobilen sind die Verkleidungen sehr extremen Temperatur- oder Feuchtigkeits-schwankungen ausgesetzt, so daß es durch Schwunderscheinungen zu Verwerfungen der Lederverkleidung kommen kann. Ferner eignet sich für das bislang übliche Verkleidungsverfahren lediglich ausgewähltes Narbenleder erster Qualität.

Weitere Bereiche, in denen eine Kaschierung von Formteilen zur Anwendung gelangt, sind beispielsweise Koffer oder auch Möbel. So werden zum Beispiel aus Hartplastik gefertigte Lehnen und Sitzflächen von Stühlen mit Leder kaschiert.

Meist ist neben dem optischen Eindruck der lederkaschierten Formteile auch der Eindruck wichtig, der beim Betasten entsteht. Die Oberfläche soll sich angenehm anfühlen, also einen "soft touch" aufweisen. Insbesondere für Sitzflächen oder Lehnen soll eine ausreichende Nachgiebigkeit erreicht werden um auch über einen längeren Zeitraum ein bequemes Sitzen zu ermöglichen.

Bisher wurde das Leder zu diesem Zweck in einem getrennten Arbeitsschritt zunächst mit einer Schaumschicht beklebt. Der so erhaltene Verbund wurde anschließend durch Kleben mit dem Untergrund, zum Beispiel einem Formstück aus Hartplastik, verbunden. Bei beiden Arbeitsvorgängen werden lösemittelbasierte Klebstoffsysteme, Dispersionskleber oder Zweikomponenten- Reaktivharzsysteme verwendet, so daß unvermeidlich Emissionen von Lösungsmittels und Restmonomeren in Kauf genommen werden müssen.

In der DE-OS 214 437 1 wird ein Verfahren zur Prägcakaschierung von Leder in einem HF-Feld beschrieben. Dabei wird die dauerhafte Verbindung einer Leder-bzw. Trägerschicht mit PVC- oder PUR-Schichten unter Mitverwendung eines durch Wärme reaktivierbaren, gegebenenfalls treibmittelhaltigen Klebstoffes in einer Hochfrequenz-Presse unter gleichzeitiger Prägung im selben Arbeitsgang erzeugt.

In der DE 197 520 58 wird ein Verfahren zum Hinterschäumen von eine Kappnaht aufweisenden Lederformstücken beschrieben. Dabei wird ein Lederformstück mit seiner vorderseite auf die Formhälfte eines geeigneten Werkzeuges aufgelegt und danach in diesem auf die Rückseite des Lederformstückes das Kunststoff-Material unter zumindest geringfügiger Druckentwicklung aufgebracht. Erfindungsgemäß wird der im Bereich der Kappnaht zwischen dem oben liegenden Lederteilstück und dem unten liegenden Lederstück anzutreffende stufenartige Höhenunterschied durch ein zwischen die Ledervorderseite und die Werkzeug-Formhälfte eingelegtes Übergangsstück ausgeglichen. Über die Verfahrensbedingungen der Hinterspritzung des Leders mit dem Kunststoffmaterial werden keine näheren Angaben gemacht.

In der EP 033 718 3 B1 wird ein Verfahren zur Formgebung von Naturleder, insbesondere von Echtleder-Verkleidungen von Formteilen beschrieben. Dabei wird in die Unterseite des Leders eine Polyurethan-Sperrschicht eingepresst, welche durch Erwärmen reaktiviert wird. Viskosität und Menge der vor dem Pressvorgang auf die Unterseite aufgebrachten Polyurethan-Schicht werden so auf einander abgestimmt, daß die Dicke der Sperrschicht 35% bis 65% der Dicke der Lederschicht trägt. Im Anschluß an die Sperrschicht wird anschließend ein Formteil hinterschäumt.

In der DE 198 151 115 A1 wird ein lederkaschiertes Innenausstattungsteil sowie ein Verfahren zur Verklebung einer Echtlederschicht mit einem Substrat beschrieben. Das lederkaschierte Innenausstattungsteil für Fahrzeuge weist ein starres Trägerformteil oder ein flexibles Abstandspolsterteil auf, auf dem mittels einer Klebeverbindungsschicht eine Echtlederschicht angeordnet ist. Die Klebeverbindungsschicht besteht aus einem flächigen Trägergebilde und einem darauf vordosierten wäremeaktiven Schmelzkleber. Zur Herstellung des Innenausstattungsteils werden die einzelnen Lagen aufeinander angeordnet und kurzzeitig unter Anpressdruck auf eine Temperatur erwärmt, bei der der Schmelzkleber schmilzt.

In der DE 198 180 34 wird eine Vorrichtung zum Herstellen von hinterschäumten Lederteilen, insbesondere von Lederverkleidungsteilen für die Innenaussattung von Fahrzeugen beschrieben. Dabei wird ein Lederteil in ein eine Oberform und eine Unterform aufweisendes Werkzeug eingelegt, das Werkzeug geschlossen und die Rückseite des Lederteils der Werkzeugform entsprechend hinterschäumt. Es sind mehrere derartige Werkzeuge auf einer Rundtischanlage installiert, wobei jedes Werkzeug im Laufe der Drehbewegung des Rundtisches, zumindest die folgenden Stationen passiert: Eine Einlegestation, eine Abklebestation, eine Schaumeintragstation, eine Aushärtestation und eine Entnahmestation.

Es sind auch Versuche unternommen worden, Leder direkt mit Kunststoffen zu hinterspritzen. So berichten S. Anders et al., Kunststoffe 80 (1990), 997-1001, von Versuchen, Leder mit Kunststoffen zu hinterspritzen. In der EP 0 199 708 A2 wird ein Verfahren zur Herstellung wenigstens zweilagiger Gegenstände beschrieben. Dabei wird ein Lederstreifen in eine Spritzgießform eingelegt und mit einem thermoplastischen Kautschuk hinterspritzt. Die Temperatur des Kunststoffes im Schneckenvorraum beträgt etwa 250°C, die Temperatur des Werkzeugs im Mittel 40°C und der Einspritzdruck beträgt 100 bar. Diese Versuche sind jedoch nur an Probestücken sehr geringer Größe, z.B. Uhrbändern, durchgeführt worden. Eine Umsetzung in die Großserienproduktion von insbesondere großflächigen Lederverbundbauteilen ist jedoch bisher gescheitert. Die Ursache hierfür liegt darin, daß bei den bisher bekannten Verfahren keine Lederoberfläche erhalten werden konnte, die ein zufriedenstellendes äußeres Erscheinungsbild zeigt. Die Oberflächen waren unregelmäßig, zeigten eine ungleichmäßige Farbe und wiesen Fehler, wie Risse oder Falten auf. Insbesondere Leder/Kunststoffbauteile mit einer weichen Oberfläche sind z.B. gemäß Woite et al., "Niederdruckverfahren für dekorative Innenausstattungsteile" in "Kunststoffe im Automobilbau: Rohstoffe, Bauteile, Systeme", VDI-Verlag, Düsseldorf, 1994, S. 303, ohne zusätzliche Maßnahmen nicht zu erhalten, die verhindern, daß Kunststoffmaterial in das Leder eindringt.

Aufgabe der Erfindung ist es, ein Verfahren zur Herstellung eines mehrschichtigen Verbundkörpers, welcher eine Schicht aus Leder umfasst, eine zumindest abschnittsweise mit der Schicht aus Leder verbundene Schicht einer aus einem Polymeren gebildeten Hartkomponente, sowie einer zwischen Leder und Hartkomponente angeordneten Schicht aus einer Weichkomponente zur Verfügung zu stellen, wobei das Verfahren einfach durchführbar sein sollte und die Herstellung des mehrschichtigen Verbundkörpers nach Möglichkeit in nur einem Arbeitsschritt ausführbar sein sollte. Insbesondere soll eine nachgiebige Lederoberfläche des mehrschichtigen Verbundkörpers erzeugt werden können.

Die Aufgabe wird bei dem erfindungsgemäß gestalteten Verfahren dadurch gelöst, daß das Leder an einer Formfläche eines Werkzeugs angelegt wird, auf dem Leder die Weichkomponente positioniert wird und das als Hartkomponente wirkende Polymere bei einem Druck von mindestens 50 bar, vorzugsweise mehr als 100 bar, insbesondere mehr als 180 bar und einer Temperatur von mehr als 100 5C, vorzugsweise 180 bis 280 °C, insbesondere 200 bis 250 °C auf die Schicht aus Leder und die Schicht der Weichkomponente aufgeformt wird, in der Weise, daß das Leder und die Hartkomponente zumindest abschnittsweise miteinander verbunden werden, wobei zumindest während des Verbindens die Formfläche des Werkzeugs temperiert wird.

Die Weichkomponente wird geeignet in einer Form zugeschnitten, daß die Lederschicht in den Randbereichen übersteht. Beim Aufformen der Hartkomponente entsteht in den Randbereichen des Verbundkörpers eine feste verbindung zwischen Leder und Hartkomponente. Die Verbindung erfolgt dabei ohne die Wirkung eines Klebstoffs. Es wird angenommen, daß das Polymere durch den hohen Druck und die hohe Temperatur in das Leder eindringt und so eine irreversible Verbindung herstellt. Die Verbindung zwischen Leder und Polymer der Hartkomponente ist so intensiv, daß beim Versuch, Lederund Polymerschicht voneinander zu trennen, die Struktur des Leders oder die Hartkomponente zerstört wird. Weiter wird auch zwischen Weichkomponente und Hartkomponente eine dauerhafte Verbindung hergestellt. Es entfällt ein Arbeitsschritt, in dem der Klebstoff auf das Leder bzw. die Weichkomponente aufgebracht wird. Somit werden Emissionen von Lösemitteln und Restmonomeren aus dem Klebstoff vollständig vermieden. Die Weichkomponente wird von der Lederschicht und der Schicht aus der Hartkomponente sandwichartig umgeben. Durch diesen Aufbau einer Sandwichstruktur wird die Weichkomponente dauerhaft und formbeständig in einer Tasche fixiert. Durch die Weichkomponente wird die Lederschicht nachgiebig und erzeugt bei Berührung ein angenehmes weiches Gefühl. Durch die Kombination mit der Hartkomponente kann der Verbundkörper in eine bestimmte Form gebracht werden, beispielsweise in die Form eines Armaturenbretts, und erhält eine hohe Stabilität. Der Formkörper weist eine sehr hohe Robustheit auf, und zeigt eine hohe Widerstandsfähigkeit gegen den Einfluß von Temperatur und Feuchtigkeit. Die Stärke der Schicht aus der Weichkomponente kann in weiten Grenzen variiert werden. So können für Armaturenbretter oder Türverkleidungen in Automobilen stärken von wenigen Millimetern vorgesehen werden, während für eine Ausführung als Sitzfläche auch Stärken bis zu mehreren Zentimetern verwirklicht werden können. Mit dem erfindungsgemäßen verfahren ist auch eine dauerhafte Kaschierung schwierig gestalteter Formstücke möglich.

Für das erfindungsgemäße Verfahren sind alle gebräuchlichen Ledersorten verwendbar. Durch die Temperierung der Formfläche des Werkzeugs wird eine Überhitzung und Zerstörung der Lederstruktur durch das mit hohem Druck bei hoher Temperatur aufgetragene thermoplastische Polymere wirksam vermieden. Es können sowohl mit Metallsalzen gegerbte Leder, z.B. Chromleder, verarbeitet werden, die eine hydrothermale Stabilität von ungefähr 100°C aufweisen, wie auch andere Leder, die eine hydrothermale Stabilität von ungefähr 70°C aufweisen. Beispiele für derartige Leder sind Vegetabilleder, Sämischleder sowie FOC (free of chrome)-Leder. Mit Metallsalzen gegerbte Leder weisen im allgemeinen einen höheren Hitzeschrumpf auf.

Metallsalzgegerbte (z.B. Chrom, Aluminium) und metallsalzfreie Leder sowie Verfahren zu deren Herstellung finden sich z.B. in "Das Leder", Jahrgang 43 (1992), Seite 283 ff., ausführlich beschrietben.

Besonders einwandfreie Lederoberflächen erhält man, wenn die am Leder anliegende Formfläche des Werkzeugs auf Temperaturen im Bereich von 40 bis 80, bevorzugt 45 - 75, besonders bevorzugt 48 - 70 und insbesondere 50 - 60°C während des Hinterformens mit dem schmelzeflüssigen Kunststoffmaterial gehalten wird.

Es können sowohl un- oder teilbehandelte wie auch behandelte Leder eingesetzt werden.

Bei der Lederherstellung nach dem Wet-End- und dem Finish-Verfahren werden die Prozesschemikalien und Farbstoffe üblicherweise so gewählt, dass sie dem Druck wie auch den thermischen Bedingungen des Hinterspritzvorgangs standhalten. Vor allem die im Wet-End-Bereich zum Einsatz kommenden Fettungsmittel sind bevorzugt im Kollagengeflecht derart fixiert, daß beim Hinterformen keine Fettmigration an die Oberfläche oder in den Kunststoff eintritt. Es kommt sonst zu unerwünschten Glanzstellen und Fettverunreinigungen an der Oberfläche des Formteils bzw. zu einer Beeinträchtigung der Haftung zwischen Leder und Kunststoff. Die in der Vorund Nachgerbung zum Einsatz kommenden Gerbstoffe werden im allgemeinen so gewählt sein, daß eine gute Faserseparierung erfolgt und die Leder eine gute Licht-, Wärme- und Hitzebeständigkeit aufweisen. Dies ist vor allem mit Glutardialdehyd, alleine oder in Kombination mit synthetischen Gerbstoffen auf Basis von Dihydroxydiphenylsulfon, zu erreichen. Unabhängig vom gewählten Gerbstoff verfügt das nach dem Wet-End-Verfahren erhaltene Leder vorteilhafterweise über eine ausreichend hohe Schrumpfungstemperatur von mindestens 70°C im nassen Zustand.

Die Dicke des verwendeten Leders ist im allgemeinen unabhängig von der Form und Anwendung des Lederbauteils und kann im Bereich von 0,4 bis 3,0 mm variieren, wobei in der Regel eine Dicke im Bereich von 0,4 bis 2,0 mm, vorzugsweise 0,8 bis 2,0 mm und insbesondere 1,2 bis 1,8 mm den meisten Anforderungen genügt.

Der Druck, mit dem die Verbindung zwischen Lederschicht und Hartkomponente hergestellt wird, ist in seiner Höhe an sich nur durch die technischen Randbedingungen des verwendeten Werkzeugs beschränkt. Eine dauerhafte Verbindung zwischen Leder und Polymer wird bereits ab Drücken von 50 bar erreicht. Sehr gute Ergebnisse werden bei Drücken von mehr als 100 bar, insbesondere mehr als 180 bar erzielt. Bei sehr großen Werkstücken, beispielsweise Armaturenbrettern wird auch mit wesentlich höheren Drücken von beispielsweise 1000 bar gearbeitet.

Der Werkzeuginnendruck, gemessen in der Nähe des Angusses, beträgt bevorzugt mindestens 50 bar, besonders bevorzugt mindestens 100 bar und insbesondere mindestens 180 bar.

Die Verarbeitungstemperatur wird in Abhängigkeit vom eingesetzten Polymeren gewählt. Vorteilhaft für eine gute Verbindung zwischen Leder und Hartkomponente ist eine hohe Fließfähigkeit des Polymeren. Günstig wird die Schmelzflußrate (MFR) 230 / 2,16 > 5 g/10 min vorzugsweise zwischen 10 bis 50 g/10 min, gewählt. Die Schmelzflußrate (MFR) wird nach ISO 1133 bei 230°C und unter einem Gewicht von 2,16 kg bestimmt. Ebenso ist ein geringer Gehalt des Polymeren an Netzmitteln wie Glyzerinmonostearat für eine gute Haftung vorteilhaft. Als günstig haben sich Gehalte von weniger als 5000 ppm Netzmittel herausgestellt.

Als Weichkomponente kann an sich jedes Material verwendet werden, das eine ausreichende Nachgiebigkeit und Elastizität aufweist. Besonders vorteilhaft ist die Weichkomponente ein Polymerschaum. Des weiteren kommen als Weichkomponente auch Textileinlagen oder -vliese oder Polyestervliese, jeweils mit oder ohne Faserverbund, z.B. aus Glas- oder Kohlefasern, in Frage. Geeignet sollte die Weichkomponente eine Temperaturbeständigkeit von mehr als 150°C ausweisen. Die Temperaturbeständigkeit der Weichkomponente muß so gewählt werden, daß die Weichkomponente beim Hinterspritzen mit der Hartkomponente ihre Nachgiebigkeit und Elastizität behält. Außer den bereits genannten Anforderungen ist das als Weichkomponente verwendete Polymere an sich keinen Beschränkungen unterworfen. Bevorzugt wird ein entsprechend geformtes Stück des aufgeschäumten Polymeren auf der Lederfläche positioniert. Es kann dabei von einer entsprechend geformten Kavität des Spritzwerkzeuges gehalten werden, in der bereits das Leder positioniert ist. Falls erforderlich, kann der Schaumstoff auch durch einen Klebefilm fixiert werden. Beim Aufformen der Hartkomponente verbindet sich der Polymerschaum mit dem Polymeren der Hartkomponente und bewirkt dadurch eine dauerhafte Fixierung innerhalb des Verbunds.

Der Polymerschaum wird beim Einspritzen komprimiert und versucht nach dem Entspannen in seine ursprüngliche Form zurückzukehren. Dadurch wird die Lederfläche unter eine leichte Spannung gesetzt, so daß sich eine straffe Polsterung ergibt. Im fertigen Verbund ist der Polymerschaum nicht oder allenfalls durch eine Klebeschicht, die zur Fixierung des Polymerschaums bei der Herstellung verwendet wurde, mit dem Leder verbunden.

Der Polymerschaum ist im Allgemeinen aus einem weitmaschig vernetzten schäumbaren Polymeren gebildet. Als das als Weichkomponente wirkende Polymer werden bevorzugt Thermoplastische Elastomere verwendet. Thermoplastische Elastomere (TPE) sind nicht durch ihre chemische Zusammensetzung, sondern vielmehr durch ihre Stoffzustände gekennzeichnet. Geeignete Thermoplastische Elastomere zeichnen sich im allgemeinen dadurch aus, daß sie gleichzeitig weiche und elastische Segmente mit niedriger Glasübergangstemperatur und harte, kristallisierbare Segmente mit geringer Dehnbarkeit, hoher Glasübergangstemperatur und Neigung zur Assoziatbildung aufweisen. Die miteinander nicht verträglichen Hartund Weichsegmente liegen in sich nicht durchdringenden Phasen vor. Harte und weiche Segmente können Bestandteile eines einzigen Polymeren sein oder in Form einer Mischung aus Elastomeren und Thermoplasten in mikroheterogener Phasenverteilung vorliegen. Die thermodynamisch unverträglichen Phasen können in Form von Trioder Mehrblockcopolymeren im selben Makromolekül oder auch in Form von Elastomerblends vorliegen. Danach sind unverträgliche Phasen aus harten, schmelzbaren und weichen, elastischen Komponenten miteinander verbunden. TPE kehren nach einer Dehnung von 100% und mehr bei Entlastung möglichst spontan und ohne nennenswerte Dehnung wieder in die Ausgangslage zurück. Es können an sich alle bekannten thermoplastischen Elastomere als Weichkomponente verwendet werden. Insbesondere geeignet sind Styrol-Oligoblock-Copolymere (TPE-S) wie Styrol-Butadien-Styrol-, Styrol-Isopren-Styrol- oder Styrol-Ethen-Butadien-Styrol-Blonkcopolymere, z.B. die Handelsprodukte Kraton®D, Cariflex®TR bzw. Kraton®G, thermoplastische Elastomere auf Olefinbasis (TPE-O) wie Mischungen aus EPM- oder EPDM-Kautschuken mit kristallinen Polyolefinen, z.B. Polypropylen, z.B. das Handelsprodukt Ferrolene® (Ferro), thermoplastische Polyurethane (TPE-U), z.B. die Handelsprodukte Desmopan® (Bayer AG) und Estane® (Goodrich), Copolyester-Typen (TPE-E) wie copolymere Polyetherester, z.B. das Handelsprodukt Hytrel® (DuPont) sowie Copolyamid-Typen (TPE-A) wie Polyether-Blockamide, z.B. das Handelsprodukt Pebax® (Atochem). Des weiteren können als Thermoplastische Elastomere auch thermoplastischer Natur-, Nitril-, Fluor- und Siliconkautschuk eingesetzt werden.

Herstellung und Eigenschaften geeigneter Thermoplastischer Elastomere finden sich z.B. in Ullmann's Encyclopedia of Industrial Chemistry, Vol. A26, S.633-664, VCH Verlagsgesellschaft, 1995, Weinheim, beschrieben.

Da der Polymerschaum beim Hinterspritzen mit der Hartkomponente nicht schmelzen und damit zusammenfallen darf, sind Polyurethanelastomere besonders bevorzugt.

Leder kann als Naturstoff nicht mit beliebig hohen Temperaturen belastet werden, ohne daß eine Denaturierung der Lederstruktur auftritt. Gebräuchliche Chromleder zeigen eine hydrothermale Stabilität von ungefähr 100°C während andere Leder eine hydrothermale Stabilität von ungefähr 70° C aufweisen. Es wurde nun gefunden, daß ein Verkochen des Leders und eine Zerstörung der Lederstruktur beim Verbinden des Leders mit dem Polymeren der Hartkomponente bei hohem Druck und hoher Temperatur wirksam vermieden werden kann, wenn die am Leder anliegende Formfläche des Werkzeugs auf eine Temperatur von 10 bis 80° C, vorzugsweise 20 bis 60°C gekühlt wird. Die Lederseite des fertiggestellten Formstücks zeigt in seiner optischen Erscheinung keine Veränderung durch die Verbindung mit der Hartkomponente. Ebenso stimmt das beim Betasten des fertiggestellten Formkörpers vermittelte Gefühl der Lederoberfläche mit dem typischen Ledergefühl überein. Trotz der Anwendung hoher Temperaturen und hohen Drucks beim Verbinden von Lederschicht und Weichkomponente zeigt die Lederseite des fertigen Verbundstücks eine gewisse Nachgiebigkeit und Weichheit. Durch die Weichkomponente wird die Lederschicht elastisch unterstützt und behält ihre natürliche Struktur.

Durch die Kühlung der Formfläche des Werkzeugs ist die hydrothermale Belastung des Leders gering. Für eine Verarbeitung hat es sich als günstig erwiesen, wenn das Leder möglichst trocken ist.

Bevorzugt weist das Leder einen Feuchtigkeitsgehalt von weniger als 20 Gew.-% auf.

Es wurde gefunden, daß bei Temperaturen von mindestens 40°C eine Ausbildung von Schwitzflecken auf der Lederoberfläche vermieden wird. Zwar erstarrt der eingespritzte Kunststoff rasch, wenn die Temperatur der temperierten Werkzeugformfläche möglichst niedrig gewählt wird und erlaubt damit kurze Taktzeiten, da das fertige Formteil sehr rasch aus dem Werkzeug entnommen werden kann, gleichzeitig ist es vorteilhaft, mit sehr hohem Druck einzuspritzen, um den Hohlraum des Werkzeugs vor dem Erstarren des Kunststoffs vollständig ausfüllen zu können. Wird die Temperatur der temperierten Formfläche des Werkzeugs unterhalb von 40°C gewählt, tritt als Schwierigkeit auf, daß das Leder sehr hohen mechanischen Belastungen ausgesetzt wird, die zu Verformungen oder Rißbildungen führen können.

Wird die temperierte Formfläche des Werkzeugs auf eine Temperatur von mehr als 80°C temperiert, nimmt die thermische Belastung des Leders stark zu, so daß eine zunehmende Zerstörung der Lederstruktur zu beobachten ist, was zu nicht akzeptablen Einbußen bei der Qualität des erzeugten Formteils führt. Außerdem erhöhen sich die Taktzeiten bei der Herstellung der Formteile deutlich, da der Kunststoff wegen der geringeren Temperaturdifferenz zwischen eingespritztem Kunststoff und temperierter Formfläche mit geringerer Geschwindigkeit verfestigt wird.

Insbesondere wenn die Temperatur der temperierten Formfläche des Werkzeugs im Bereich von 50 - 60°C gehalten wird, ist ein Hochdruckhinterspritzen bei hohen Temperaturen, beispielsweise bei einer Temperatur von mehr als 100°C, vorzugsweise im Bereich von 180 - 280°C, insbesondere bevorzugt im Bereich von 200 bis 250°C möglich, ohne daß das Leder, auch nicht im Dauerbetrieb, in Mitleidemschaft gezogen wird. Die Temperierungszeiten können dabei sogar im Bereich von Minuten liegen. Mit dem beschriebenen Verfahren können auch Dünnwandspritzgußanwendungen vorgenommen werden.

Als thermoplastische Polymere kommen unter anderem Polypropylen, Polyethylen, Polyvinylchlorid, Polyethersulfone, Polysulfone, Polyetherketone, Polycycloolefine, Poly(meth)acrylate, Polyamide, Polycarbonate, Polyphenylenether, Polyurethane, Polyacetale, z.B. Polyoxymethylen, Polyester, z.B. Polybutylenterephthalate, Polystyrole und Styrol(co)polymerisate wie ABS-, AES-, ASA- oder SAN-Polymerisate in Betracht. Dabei sind sowohl Homopolymere als auch Copolymere dieser thermoplastischen Polymere verwendbar.

Besonders geeignet sind ABS-Polymerisate (hierbei handelt es sich u.a. um schlagzäh modifizierte Styrol/Acrylnitril-Polymerisate, bei denen Pfropfcopolymerisate von Styrol und Acrylnitril auf Polybutadienkautschuken in einer Copolymermatrix aus Styrol und Acrylnitril vorliegen), ASA-Polymerisate, SAN-Polymerisate, Mischungen aus Poly(meth)acrylaten uns SAN-Polymerisaten, die mit Polyacrylatkautschuken schlagzäh modifiziert sind (z.B. Terlux®, BASF AG), Polypropylen, Polyamide, Polybutylenterephthalat, Polyethylen, thermoplastische Polyurethane, Polycarbonat oder deren Mischungen, z.B. PPE/HIPS (High Impact Polystyrene)-Blends, z.B. im Handel erhältlich unter der Marke Luranyl® (BASF AG). Bevorzugte Polymerblends gehen zurück auf ASA/PC-, ABS/PC-, PBT/ASA-, PBT/ABS- und PBT/PC-Mischungen.

Die vorgenannten Polymere sind im allgemeinen bekannt und finden sich beispielsweise in H. Domininghaus, Die Kunststoffe und ihre Eigenschaften, VDI-Verlag, Düsseldorf, 1992, beschrieben.

Das als Hartkomponente eingesetzte Polymere kann auch Recyclate aus diesen thermoplastischen Polymeren enthalten oder vollständig oder nahezu vollständig aus Recyclaten bestehen.

Das bevorzugt verwendete Polybutylenterephthalat ist ein höhermolekulares Veresterungsprodukt von Terephthalsäure mit Butylenglycol mit einer Schmelzflußrate (MFR) nach ISO 1133, bei 230°C und unter einem Gewicht von 2,16 kg, von 5 bis 50 g/10 min, insbesondere von 5 bis 30 g/10 min.

Als Copolymere des Styrols kommen insbesondere Copolymere mit bis zu 45 Gew.-%, vorzugsweise mit bis zu 20 Gew.-% an einpolymerisiertem Acylnitiril in Betracht. Derartige Copolymere aus Styrol und Acrylnitril (SAN) weisen eine Schmelzflußrate (MFR), nach ISO 1133, bei 230°C und unter einem Gewicht von 2,16 kg von 1 bis 25 g/10 min, insbesondere von 4 bis 20 g/10 min auf.

Weitere, ebenfalls bevorzugt eingesetzte Copolymere des Styrols enthalten bis zu 35 Gew.-%, insbesondere bis zu 20 Gew.-% einpolymerisiertes Acrylnitril, bis zu 35 Gew.-% insbesondere bis zu 30 Gew.-% einpolymerisiertes Butadien. Die Schmelzflußrate derartiger Copolymere aus Styrol, Acrylnitril und Butadien (ABS) nach ISO 1133, bei 230°C und unter einem Gewicht von 2,16 kg, liegt im Bereich von 1 bis 40 g/10 min, insbesondere im Bereich von 2 bis 30 g/10 min.

Unter ASA-Polymerisate werden im allgemeinen schlagzähmodifizierte Styrol/Acrylnitril-Polymerisate verstanden, bei denen Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und Acrylnitril vorliegen. Im Handel sind ASA-Polymerisate z.B. unter dem Namen Luran®S (Fa. BASF AG) erhältlich.

Geeignete Polycarbonate sind an sich bekannt. Besonders bevorzugte Polycarbonate sind solche auf der Basis von Bisphenol A oder Bisphenol A zusammen mit bis zu 80 Mol-% an weiteren aromatischen Dihydroxyverbindungen. Kommerziell erhältlich sind z.B. die Polycarbonate Makrolon® (Fa. Bayer AG) und Lexan® (Fa. GE Plastics B.V.). Es kommen auch Copolycarbonate auf der Basis von Bisphenol A und z.B. Bis-(3,5-dimethyl-4-hydroxyphenyl)sulfon bzw. 1,1-Di-(4-hydroxyphenyl)-3,3,5-trimethyl-cyclohexyl, die sich durch eine hohe Wärmeformbeständigkeit auszeichnen, in Frage. Letztgenanntes Copolycarbonat ist kommerziell unter dem Handelsnamen Apec®HT (Fa. Bayer AG) erhältlich. Die Polycarbonate können sowohl als Mahlgut als auch in granulierter Form eingesetzt werden. Als Mischungsbestandteil, insbesondere in einer ASA-Substratschicht, liegen Polycarbonate üblicherweise in Mengen von 1 bis 80, bevorzugt 9 bis 50 Gew.-% und besonders bevorzugt 15 bis 45 Gew.-%, bezogen auf die jeweilige Mischung vor. Der Zusatz von Polycarbonaten führt unter anderem zu höherer Thermostabilität und verbesserter Rissbeständigkeit der Verbundschichtfolien.

Als weitere Polymerematerialien werden insbesondere auch Polyolefine wie Polyethylen oder Polypropylen eingesetzt, wobei letzteres bevorzugt verwendet wird. Unter der Bezeichnung "Polypropylen" sollen dabei sowohl Homo- als auch Copolymere des Propylens verstanden werden. Copolymere des Propylens enthalten in untergeordneten Mengen mit Propylen copolymerisierbare Monomere, beispielsweise C₂ bis C₈ -Alk-1-ene, wie unter anderem Ethylen, But-1--en, Pent-1-en oder Hex-1-en. Es können auch zwei oder mehrere verschiedene Comonomere verwendet werden.

Besonders geeignete Träger sind unter anderem Homopolymere des Propylens oder Copolymere des Propylens mit bis zu 50 Gew.-% einpolymerisierter anderer 1-Alkene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten Sie im Allgemeinen bis zu 15 Gew.-%, bevorzugt bis zu 6 Gew.-% andere 1-Alkene mit bis zu 8 C-Atomen, insbesondere Ethylen, 1-Buten oder ein Gemisch aus Ethylen und 1-Buten.

Block- oder Impact-Copolymere des Propylens sind Polymere, bei denen man in der ersten Stufe ein Propylen-Homopolymer oder ein statistisches Copolymer des Propylens mit bis zu 15 Gew.-%, bevorzugt bis zu 6 Gew.-% anderer 1-Alkene mit bis zu 8 C-Atomen herstellt und dann in der zweiten Stufe ein Propylen- EthylenCopolymer mit Ethylengehalten von 15 bis 80 Gew.-%, wobei das Propylen-Ethylen-Copolymer zusätzlich noch weitere C₄- bis C₈-Alk-1-ene enthalten kann, hinzupolymerisiert. In der Regel wird soviel des Propylen-Ethylen-Polymer hinzupolymerisiert, daß das in der zweiten Stufe erzeugte Copolymer im Endprodukt einen Anteil von 3 bis 60 Gew.-% aufweist.

Das Polymermaterial kann, bezogen auf das Gesamtgewicht des Trägers, 1 bis 60, vorzugsweise 5 bis 50, besonders bevorzugt 10 bis 40 Gew.-% an verstärkenden Füllstoffen enthalten, wie zum Beispiel Holzmehl, amorphe Kieselsäure, Magnesiumcarbonat, Magnesiumhydroxid, Kreide, gepulvertes Quarz, Glimmer, Mica, Bentonite, Talkum, insbesondere mit einer mittleren Korngröße im Bereich von 0,1 bis 10 µm gemessen nach DIN 66115, Calciumcarbonat, Bariumsulfat, Glaskugeln, Feldspat oder insbesondere Calciumsilicate wie Wollastonit und Kaolin.

Des weiteren kommen Fasern, worunter vorliegend auch plättchenförmige Produkte zu verstehen sind, in Frage.

Als Beispiele für faserförmige Füllstoffe seien Kohlenstoff-, Aramid-, Stahl- oder Glasfasern, Aluminium-Flakes, Schnittglas oder Glasseidenrovings genannt. Besonders bevorzugt sind Glasfasern. Des weiteren können als Fasern Naturfasern wie Flachs, Hanf, Jute, Sisal, Ramie oder Carnaf eingesetzt werden.

Die verwendeten Glasfasern können aus E-, A- oder C-Glas sein und sind vorzugsweise mit einer Schlichte und/oder einem Haftvermittler ausgerüstet. Es können sowohl Endlosfasern (rovings) als auch Schnittglasfasern (staple eingesetzt werden.

Es können auch Mischungen an Fasern und/oder teilchenförmigen Füllstoffen verwendet werden.

Außerdem kann man dem Polymermaterial noch die üblichen Zusatzstoffe wie Licht-, UV- und Wärmestabilisatoren, Ruße, Gleitmittel, Wachse, Effektfarbmittel, oder Flammschutzmittel und dergleichen in den üblichen und erforderlichen Mengen hinzufügen.

Nach einer besonders vorteilhaften Ausführungsform des Verfahrens erfolgt das Verbinden von Hartkomponente und Leder durch Spritzgiessen. Dabei wird das Lederstück in die Form eines Werkzeugs eingelegt, dann beispielsweise ein Polymerschaum auf der Lederfläche positioniert und anschließend Leder und Polymerschaum mit der Hartkomponente hinterspritzt.

Als Werkzeuge können im erfindungsgemäßen Verfahren die in der Kunststofftechnik üblichen Apparaturen verwendet werden, beispielsweise Spritzgießwerkzeuge für das Spritzgießen. Wesentlich ist, daß jeweils auf der Lederseite des Verbundkörpers für eine ausreichende Wärmeabfuhr gesorgt werden kann. Üblicherweise ist dazu eine entsprechende Kühlung des Spritzwerkzeugs vorgesehen.

Beim Spritzgießen wird die Lederschicht und der Polymerschaum entweder direkt über ein Tiefziehverfahren dreidimensional vorgeformt und anschließend in einem Spritzgießwerkzeug mit der Hartkomponente hinterspritzt oder das Leder in der Spritzgiessform durch die einströmende Polymerschmelze direkt tiefgezogen.

Für die Herstellung des mehrschichtigen Verbundkörpers kann neben dem Spritzgießen auch auf geeignete Pressverfahren, z.B. das Hinterprägen oder Thermovliespressen zurückgegriffen werden. Zum Hinterprägen eignen sich z.B. das Quellfluss- und das Strangablegeverfahren. Vorstehende Verfahren finden sich auch bei Weite et al., "Niederdruckverfahren für dekorative Innenausstattungsteile" in "Kunststoffe im Automobilbau: Rohstoffe, Bauteile, Systemen", VDI-Verlag, 1994, Düsseldorf, S. 280-312, beschrieben.

Nach einer Ausführungsform des Verfahrens wird die Hartkomponente in einem Extruder auf eine Temperatur von wenigstens 150°C erhitzt und extrudiert. Der extrudierten Hartkomponenten wird das Leder und die Weichkomponente über temperierte Kalander- oder Prägewalzen zugeführt und die Schicht aus Leder, die Schicht der Weichkomponente und die Schicht der Hartkomponente unter Druck miteinander verbunden. Das erwärmte thermoplastische Polymer wird geeignet durch eine entsprechend geformte Breitbanddüse ausgestoßen.

Das dreidimensionale Verformen des Komposits aus Leder-, Weichund Hartkomponente kann innerhalb des Werkzeugs, das heißt, der Kalander- oder Prägewalze, erfolgen. Dabei werden auf der Seite der Hartkomponente der Verbundkörper auf die erforderlichen hohen Temperaturen erhitzt, während auf der Lederseite der Verbundkörper gekühlt wird.

Die mit dem erfindungsgemäßen Verfahren herstellbaren Verbundkörper zeigen äußerst günstige Eigenschaften. Gegenstand der Erfindung ist daher auch ein mehrschichtiger Verbundkörper mit einer Schicht aus Leder, einer Schicht aus einer Hartkomponente und einer zwischen der Schicht aus Leder und der Schicht aus der Hartner zwischen der Schicht aus Leder und der Schicht aus der Hartkomponente angeordneten Schicht einer Weichkomponente, wobei das Leder und die Hartkomponente abschnittsweise klebstoffrei miteinander verbunden sind, insbesondere das Leder in den Abschnitten von der Hartkomponente zumindest teilweise durchdrungen ist.

Durch das in die Lederschicht eingedrungene thermoplastische Polymere werden Lederschicht und Hartkomponente irreversibel miteinander verbunden. Ein Abtrennen der Lederschicht vom darunter liegenden Träger ist bei den meisten gebräuchlichen Kunststoffen nur unter Zerstörung der Lederstruktur möglich. Bei dem erfindungsgemäßen dreidimensionalen Verbundkörper ist für die Verbindung von Lederschicht und Hartkomponente kein weiteres Material als Klebstoff erforderlich. Charakteristisch für den erfindungsgemäßen dreidimensionalen Verbundkörper ist also die Abwesenheit einer Klebstoffschicht zwischen Leder- und Hartkomponente.

Für eine gute Verbindung zwischen Lederschicht und Hartkomponente hat sich als günstig erwiesen, daß die Eindringtiefe des ersten Polymeren in das Leder 5 bis 40%, vorzugsweise 10 bis 30% der Stärke der Lederschicht beträgt. Die erforderliche Eindringtiefe hängt ab von der Lederdicke sowie den Ansprüchen an die mechanische Widerstandsfähigkeit.

Die erfindungsgemäßen Verbundkörper können in einer Vielzahl von Anwendungen, insbesondere für großflächige Verbunctbauteile eingesetzt werden. Neben dem bereits erwähnten Einsatz in der Automobilindustrie für die Verkleidung von Armaturenbrettern, für Innenverkleidungen, Mittelkonsolen u.s.w. ist beispielsweise eine Ausgestaltung des Verbundkörpers als Schutzhülle für Mobiltelefone, eine Ausrüstung von Schalenkoffern mit Lederoberflächen oder ein Einsatz in der Schuh- oder Bekleidungsindustrie für direkt angespritzte Kappen, Schulterstücke und Schutzkleidungseinzelteile denkbar. Ein weiteres Einsatzgebiet ist beispielsweise die Möbelindustrie. Hier ist eine Ausgestaltung des Verbundkörpers als Rückenlehne, Sitzfläche oder Armlehne von Sitzmöbeln denkbar. Die Erfindung ist weit über die genannten Einsatzbeispiele hinaus verwendbar. Besondere Vorteile bietet sie in dem Fall, wenn neben den optischen Eigenschaften auch das Gefühl wichtig ist, daß beim Betasten der Lederoberfläche erzeugt wird.

Die Erfindung wird im weiteren unter Bezug auf eine Zeichnung näher erläutert.

Dabei zeigt:

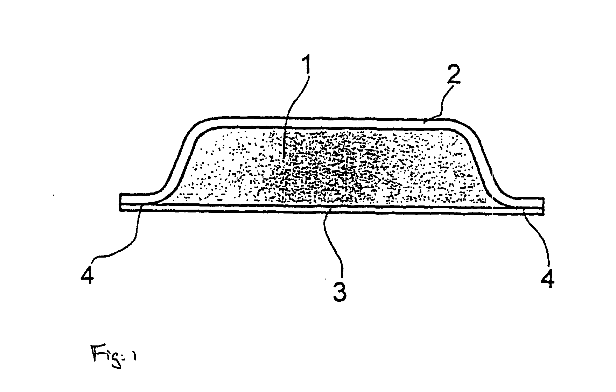

- Figur 1:: einen Querschnitt durch einen erfindungsgemäßen Formkörper.
Figur 1 zeigt einen Querschnitt durch einen erfindungsgemäßen Verbundkörper. Der Verbundkörper umfasst einen Kern 1 aus einem Polymerschaum, der zur einen Seite hin von einer Schicht 2 aus Leder und zur anderen Seite in von einer Schicht 3 einer Hartkomponente umgeben wird. Die Hartkomponente weist eine gewisse Steifigkeit auf und ist beispielsweise aus Polypropylen ausgebildet. Lederschicht 2 und Hartkomponente 3 bilden eine Tasche aus, die vom Polymerschaum 1 ausgefüllt ist. In den Randbereichen 4 berühren sich die Schicht 2 aus Leder und die Hartkomponente 3 ohne daß zwischen Ihnen Polymerschaum 1 angeordnet ist. In diesen Bereichen 4 sind Lederschicht 2 und Hartkomponente 3 klebstoffrei miteinander verbunden. Dabei dringt die Hartkomponente 3 etwas in die Lederschicht 2 ein. In den Bereichen, in denen Polymerschaum 1 und Hartkomponente 3 miteinander in Berührung stehen, ist durch das Hinterspritzen mit der Hartkomponente ebenfalls eine dauerhafte Verbindung ausgebildet. Die Verbindung zwischen Lederschicht 2 und Hartkomponente 3 muß nicht zwangsläufig in den Randbereichen des Formstücks erfolgen. Es können auch innerhalb der Fläche der Hartkomponente 3 Berührungspunkte mit der Lederschicht 2 vorgesehen sein, in denen Lederschicht und Hartkomponente dauerhaft verbunden werden.

## Patentansprüche

1. Verfahren zur Herstellung eines mehrschichtigen Verbundkörpers, welcher eine Schicht aus Leder umfasst, eine abschnittsweise mit der Schicht aus Leder verbundene Schicht einer aus einem Polymeren gebildeten Hartkomponente, sowie einer zwischen Leder- und Hartkomponente angeordneten Schicht aus einer Weichkomponente, **dadurch gekennzeichnet, daß** das Leder an einer Formfläche eines Werkzeugs angelegt wird, auf dem Leder die Weichkomponente positioniert wird und das als Hartkomponente wirkende Polymere bei einem Druck von mindestens 50 bar, vorzugsweise mehr als 100 bar, insbesondere mehr als 180 bar, und einer Temperatur von mehr als 100°C, vorzugsweise 180 bis 280°C, insbesondere 200 bis 250°C auf die Schicht aus Leder und die Schicht der Weichkomponente aufgeformt wird, in der Weise, daß das Leder und die Hartkomponente zumindest abschnittsweise miteinander verbunden werden, wobei während des Aufformens der Hartkomponente die Formfläche des Werkzeugs temperiert wird.

2. Verfahren nach Anspruch 1, **dadurch gekennzeichnet, daß** die am Leder anliegende Formfläche des Werkzeugs auf eine Temperatur von 10 bis 80°C, vorzugsweise 20 bis 60°C temperiert wird.

3. Verfahren nach Anspruch 1 oder 2, **dadurch gekennzeichnet, daß** die Weichkomponente ein Polymerschaum ist.

4. Verfahren nach Anspruch 4, **dadurch gekennzeichnet, daß** der Polymerschaum aus einem weitmaschig vernetzten Polymeren gebildet ist, vorzugsweise einem thermoplastischen Elastomeren, insbesondere von Polyurethanelastomeren.

5. Verfahren nach einem der Ansprüche 1 bis 4, **dadurch gekennzeichnet, daß** das Leder einen Feuchtigkeitsgehalt von weniger als 20 Gew.-% aufweist.

6. Verfahren nach einem der Ansprüche 1 bis 5, **dadurch gekennzeichnet, daß** das Polymere der Hartkomponente ausgewählt ist aus der Gruppe, die gebildet wird aus Polypropylen, Polyethylen, Polyvinylchlorid, Polyethersulfonen, Polysulfonen, Polyetherketonen, Polycycloolefinen, Poly(meth)acrylaten, Polyamiden, Polycarbonaten, Polyphenylenethern, Polyurethanen, Polyacetalen, Polybutylenterephtahalaten, Polystyrol, Styrol(co)polymerisaten und deren Mischungen.

7. Vorfahren nach einem der Ansprüche 1 bis 6, **dadurch gekennzeichnet, daß** das Verbinden von Hartkomponente und Leder durch Spritzgiessen erfolgt.

8. Verfahren nach einem der Ansprüche 1 bis 6, **dadurch gekennzeichnet, daß** die Hartkomponente in einem Extruder auf eine Temperatur von wenigstens 150°C erhitzt und extrudiert wird, der extrudierten Hartkomponente das Leder und die Weichkomponente über temperierte Kalander- oder Prägewalzen zugeführt wird, und die Schicht aus Leder, die Schicht der Weichkomponente und die Schicht der Hartkomponente unter Druck miteinander verbunden werden.

9. Mehrschichtiger Verbundkörper, mit einer Schicht aus Leder, einer Schicht aus einer Hartkomponente und einer zwischen der Schicht aus Leder und der Schicht der Hartkomponente angeordneten Schicht einer Weichkomponente, wobei Leder und Hartkomponente abschnittsweise klebstoffrei miteinander verbunden sind, insbesondere das Leder in den Abschnitten von der Hartkomponente zumindest teilweise durchdrungen ist.

10. Mehrschichtiger Verbundkörper nach Anspruch 9, **dadurch gekennzeichnet, daß** die Eindringtiefe des die Hartkomponente bildenden Polymeren in das Leder 5 bis 40%, vorzugsweise 10 bis 30%, der Dicke der Lederschicht beträgt.

## Claims

1. A process for the production of a multilayered composite element which comprises a layer of leather, a layer of a hard component formed from a polymer, which is bonded to the leather layer in certain areas, and a layer of a soft component, which is arranged between the leather component and the hard component, which comprises laying the leather against one mold surface of a mold, positioning the soft component on the leather, and molding the polymer acting as hard component onto the leather layer and the soft component layer at a pressure of at least 50 bar, preferably greater than 100 bar, in particular greater than 180 bar, and at a temperature of greater than 100°C, preferably from 180 to 280°C, in particular from 200 to 250°C, by bonding the leather and the hard component to one another in certain areas at least, with the temperature of the mold surface of the mold being controlled, at least during the bonding.

2. A process as claimed in claim 1, wherein the mold surface in contact with the leather is held at a temperature of from 10 to 80°C, preferably from 20 to 60°C.

3. A process as claimed in claim 1 or 2, wherein the soft component is a polymer foam.

4. A process as claimed in claim 4, wherein the polymer foam is formed from a polymer crosslinked with wide meshes, preferably a thermoplastic elastomer, in particular from polyurethane elastomers.

5. A process as claimed in one of claims 1 to 4, wherein the leather has a moisture content of less than 20% by weight.

6. A process as claimed in one of claims 1 to 5, wherein the polymer of the hard component is selected from the group which is formed from polypropylene, polyethylene, polyvinyl chloride, polyether sulfones, polysulfones, polyether ketones, polycycloolefins, poly(meth)acrylates, polyamides, polycarbonates, polyphenylene ethers, polyurethanes, polyacetals, polybutylene terephthalates, polystyrene, styrene (co)polymers and mixtures thereof.

7. A process as claimed in one of claims 1 to 6, wherein the hard component and the leather are bonded by injection molding.

8. A process as claimed in one of claims 1 to 6, wherein the hard component is heated to a temperature of at least 150°C in an extruder and extruded, the leather and the soft component are fed to the extruded hard component over temperature-controlled calender or embossing rolls, and the leather layer, the soft component layer and the hard component layer are bonded to one another under pressure.

9. A multilayered composite element having a layer of leather, a layer of a hard component and a layer of a soft component, which is arranged between the leather layer and the hard component layer, where the leather and the hard component are bonded to one another without an adhesive in areas, in particular the hard component has at least partially penetrated into the leather in the areas.

10. A multilayered composition element as claimed in claim 9, wherein the penetration depth of the polymer forming the hard component into the leather is from 5 to 40%, preferably from 10 to 30%, of the thickness of the leather layer.

## Revendications

1. Procédé de production d'un corps composite, comprenant une couche de cuir, une couche d'un composant dur constitué d'un polymère, liée de manière sectionnelle à la couche de cuir, ainsi qu'une couche placée entre le composant de cuir et le composant dur et constituée d'un composant mou, **caractérisé en ce que** le cuir est placé sur la surface de moulage d'un outil, que le composant mou est positionné sur le cuir et que le polymère faisant office de composant dur est moulé sur la couche de cuir et la couche du composant mou, à une pression d'au moins 50 bar, de préférence de plus de 100 bar, en particulier de plus de 180 bar et à une température de plus de 100°C, de préférence de 180 à 280°C, en particulier de 200 à 250°C, de manière que le cuir et le composant mou soient liés ensemble de manière au moins sectionnelle, la surface de moulage de l'outil étant régulée en température pendant le moulage du composant dur.

2. Procédé selon la revendication 1, **caractérisé en ce que** la surface de moulage de l'outil en contact avec le cuir est régulée à une température de 10 à 80°C, de préférence de 20 à 60"C.

3. Procédé selon la revendication 1 ou 2, **caractérisé en ce que** le composant mou est une mousse polymère.

4. Procédé selon la revendication 4, **caractérisé en ce que** la mousse polymère est constituée d'un polymère réticulé à larges mailles, de préférence un élastomère thermoplastique, en particulier un élastomère polyuréthanne.

5. Procédé selon l'une quelconque des revendications 1 à 4, **caractérisé en ce que** le cuir présente une teneur en humidité de moins de 20% en poids.

6. Procédé selon l'une quelconque des revendications 1 à 5, **caractérisé en ce que** le polymère du composant dur est choisi dans le groupe formé par le polypropylène, le polyéthylène, le poly(chlorure de vinyle), des polyéthersulfones, des polysulfones, des polyéthercétones, des polycyclooléfines, des poly(méth)acrylates, des polyamides, des polycarbonates, des poly(éthers de phénylène), des polyuréthannes, des polyacétals, des polybutylène téréphtalates, du polystyrène, des (co)polymères de styrène, et leurs mélanges.

7. Procédé selon l'une quelconque des revendications 1 à 6, **caractérisé en ce que** la liaison du composant dur et du cuir est réalisée par moulage par injection.

8. Procédé selon l'une quelconque des revendications 1 à 6, **caractérisé en ce que** le composant dur est chauffé dans une extrudeuse à une température d'au moins 150°C et extrudé, que le composant dur extrudé est réuni au cuir et au composant mou via des rouleaux de calandrage ou de gaufrage et que la couche de cuir, la couche du composant mou et la couche du composant dur sont liées entre elles sous compression.

9. Corps composite multicouche comportant une couche de cuir, une couche d'un composant dur et une couche d'un composant mou placée entre la couche de cuir et la couche du composant dur, où le cuit et le composant dur sont solidarisés sans adhésif au moins de manière sectionnelle, et en particulier dans les sections, le cuir est au moins en partie pénétré par le composant dur.

10. Corps composite multicouche selon la revendication 9, **caractérisé en ce que** la profondeur de pénétration du polymère formant le composant dur dans le cuir est de 5 à 40%, de préférence de 10 à 30%, de l'épaisseur de la couche de cuir.
